# EUROPÄISCHE PATENTANMELDUNG

(11) **EP 3 333 998 A1**
(43) Veröffentlichungstag der Anmeldung: **13.06.2018**
(21) Anmeldenummer: 16202326.1
(22) Anmeldetag: 06.12.2016
(51) Int. Cl.: H02G 7/00, H01B 17/50

(54) **VERSCHMUTZUNGSSCHUTZ FÜR HOCHSPANNUNGSISOLATOREN**

(71) Anmelder: Bayernwerk AG, 93049 Regensburg (DE)
(72) Erfinder: Tauber, Wolfgang, 92676 Eschenbach (DE)
(74) Vertreter: Glawe, Delfs, Moll

(57) **Zusammenfassung**

Die Erfindung betrifft eine Verschmutzungsschutzvorrichtung (10) für Hochspannungsisolatoren (3) sowie eine Anordnung aus Verschmutzungsschutzvorrichtung (10) und Hochspannungsisolator (3).

Die erfindungsgemäße Verschmutzungsschutzvorrichtung (10) für Hochspannungsisolatoren (3) ist zur Befestigung an der Isolatorkappe (5) des Hochspannungsisolators (3) ausgebildet und umfasst dafür einen Befestigungsbereich (20), der für eine formschlüssige Verbindung mit der Isolatorkappe (5) ausgebildet ist und eine Durchführungsöffnung (21) für das Anschlusselement (7) der Isolatorkappe (5) aufweist. Weiterhin ist ein Schutzschirm (30) vorgesehen, der sich radial um den Befestigungsbereich (20) erstreckt, um den Hochspannungsisolator (3) zu überdecken.

Die Anordnung umfasst einen Hochspannungsisolator (3) mit Isolatorkappe (5) und eine an der Isolatorkappe (5) angeordnete Verschmutzungsschutzvorrichtung (10), wobei die Verschmutzungsschutzvorrichtung (10) erfindungsgemäß ausgebildet und durch Formschluss mit der Isolatorkappe (5) verbunden ist.

## Beschreibung

Die Erfindung betrifft eine Verschmutzungsschutzvorrichtung für Hochspannungsisolatoren sowie eine Anordnung aus Verschmutzungsschutzvorrichtung und Hochspannungsisolator.

Überirdische Hochspannungsleitungen sind regelmäßig über Hochspannungsmasten geführt. Um die Hochspannungsmasten elektrisch von den Hochspannungsleitungen zu trennen, sind an den Aufhängungspunkten zwischen den Hochspannungsleitungen und den Hochspannungsmasten jeweils Hochspannungsisolatoren vorgesehen. Dabei kommen häufig Langstabisolatoren zum Einsatz, die an Traversen des Hochspannungsmastes aufgehängt sind und an deren freien Ende die Hochspannungsleitung befestigt ist.

Auch wenn die Hochspannungsisolatoren grundsätzlich ausreichend für die gewünschte Isolation zwischen Hochspannungsleitung und Hochspannungsmast ausgelegt sind, kommt es immer wieder zu sog. Erdschlüssen und Erdkurzschlüssen, bei denen ein Hochspannungsisolator überbrückt wird und die daran befestigte Hochspannungsleitung über den Hochspannungsmast mit der Erde verbunden wird. Je nach Sternpunktbehandlung des Hochspannungsnetzes und der Dauer der Netzstörung können diese einpoligen Fehler massive Auswirkungen auf nachgelagerte Netze und angeschlossene Verbraucher haben, weshalb es im Stand der Technik Bestrebungen gibt, diese Störungen zu reduzieren und die Betriebssicherheit zu erhöhen.

Da als eine Ursache für das Auftreten von Erdschlüssen und Erdkurzschlüssen auf den Hochspannungsisolatoren unmittelbar auftreffender oder abgelagerter Vogeldreck - insbesondere in Kombination mit Feuchtigkeit - identifiziert wurde, schlägt bspw. die technische Spezifikation der Internationalen Elektrotechnischen Kommission IEC/TS 60815-1:200 - Auswahl und Bemessung von Hochspannungsisolatoren für die Anwendung unter Verschmutzungsbedingungen - Teil 1: Begriffe, Informationen und allgemeine Grundlagen vor "... Abschreckungsvorrichtungen oder Vogelstangen anzubringen, die an die örtliche Fauna und an die Konstruktion angepasst sind", um zu vermeiden, dass sich Vögel oberhalb der Hochspannungsisolatoren auf den Hochspannungsmasten niederlassen, ihr Geschäft verrichten und so die Hochspannungsisolatoren verschmutzen. Es hat sich jedoch gezeigt, dass durch entsprechende Vorrichtungen Erdschlüsse und Erdkurzschlüsse nur in überschaubaren Umfang reduziert werden können.

Auch sind Schutzvorrichtungen bekannt, bei denen unmittelbar am Hochspannungsmast oberhalb der Hochspannungsisolatoren auf den Masttraversen Überdachungen vorgesehen werden, die zum Fernhalten von Vogeldreck von den Hochspannungsisolatoren ausgebildet sind. Auch wenn über entsprechende Überdachungen die Verschmutzung der Hochspannungsisolatoren deutlich reduziert werden kann, weisen die Überdachungen gemäß dem Stand der Technik einige Nachteile auf. So sind die Kosten für die Beschaffung und die Montage der Überdachungen erheblich, die Maststatik insbesondere bei Eis, Schnee und Starkwind wird negativ beeinflusst und Wartungsarbeiten an den Masttraversen und den Hochspannungsisolatoren werden erschwert.

Der Erfindung liegt daher die Aufgabe zugrunde, eine Vorrichtung zur wirksamen Reduzierung von Erdschlüssen und Erdkurzschlüssen an überirdischen Hochspannungsleitungen aufgrund von Vogeldreck zu schaffen, bei der die aus dem Stand der Technik bekannten Nachteile nicht mehr oder nur noch in vermindertem Umfang auftreten.

Gelöst wird diese Aufgabe durch eine Verschmutzungsschutzvorrichtung gemäß dem Hauptanspruch sowie eine Anordnung aus Verschmutzungsschutzvorrichtung und Hochspannungsisolator gemäß dem Anspruch 13. Vorteilhafte Weiterbildungen sind Gegenstand der abhängigen Ansprüche.

Demnach betrifft die Erfindung eine Verschmutzungsschutzvorrichtung für Hochspannungsisolatoren zur Befestigung an der Isolatorkappe des Hochspannungsisolators umfassend einen Befestigungsbereich, der für eine formschlüssige Verbindung mit der Isolatorkappe ausgebildet ist und eine Durchführungsöffnung für das Anschlusselement der Isolatorkappe aufweist, und einem Schutzschirm, der sich radial um den Befestigungsbereich erstreckt, um den Hochspannungsisolator zu überdecken.

Die Erfindung betrifft weiterhin eine Anordnung umfassend einen Hochspannungsisolator mit Isolatorkappe und eine an der Isolatorkappe angeordnete Verschmutzungsschutzvorrichtung, wobei die Verschmutzungsschutzvorrichtung erfindungsgemäß ausgebildet ist und durch Formschluss mit der Isolatorkappe verbunden ist

Die erfindungsgemäße Verschmutzungsschutzvorrichtung bietet einen guten Schutz für durch Vögel verursachte Verschmutzung, wobei der Vogeldreck insbesondere durch den Schutzschirm vom Hochspannungsisolator ferngehalten wird.

Die Erfindung hat erkannt, dass die bei Hochspannungsisolatoren - insbesondere wenn sie als Langstabisolatoren ausgebildet sind - zur Anbindung an einen Hochspannungsmast regelmäßig vorgesehenen Isolatorkappen besonders dazu geeignet sind, um daran eine Verschmutzungsschutzvorrichtung zu befestigen. Eine ausreichende Befestigung kann dabei bereits durch Formschluss zwischen dem Befestigungsbereich der Verschmutzungsschutzvorrichtung und der Isolatorkappe erreicht werden. Für das Anschlusselement der Isolatorkappe, mit dem die Isolatorkappe und damit der Hochspannungsisolator letztendlich an einem Hochspannungsmast befestigt werden, weist die Verschmutzungsschutzvorrichtung eine Durchführungsöffnung auf.

Eine bauliche Veränderung des Hochspannungsisolators, der Isolatorkappe und/oder dem Hochspannungsmast ist für die Installation einer erfindungsgemäßen Verschmutzungsschutzvorrichtung nicht erforderlich, sodass weiterhin auf normierte und bereits zugelassene Bauteile zurückgegriffen werden kann. Da die erfindungsgemäße Verschmutzungsschutzvorrichtung an der Isolatorkappe und damit an der Erdpotentialseite des Hochspannungsisolators angeordnet ist, muss sie auch keine besonderen elektrischen Anforderungen erfüllen. Auch kann die Formschlussverbindung zwischen Befestigungsbereich und Isolatorkappe bereits derart ausreichend sein, dass keine weiteren Befestigungselemente erforderlich sind. Insbesondere in diesem Fall ist für die eigentliche Montage der erfindungsgemäßen Verschmutzungsschutzvorrichtung häufig dann keinerlei Werkzeug erforderlich.

Indem sich der Schutzschirm radial um den Befestigungsbereich erstreckt, der mit der Isolatorkappe zusammenwirkt, ist sichergestellt, dass sich der Schutzschirm über den gesamten Umfang des Hochspannungsisolators erstreckt. Dabei ist erfindungsgemäß vorgesehen, dass der Schutzschirm den Hochspannungsisolator überdeckt, also derart dimensioniert ist, dass die Ausdehnung des Schutzschirm senkrecht zur Längsachse des Hochspannungsisolators in allen Richtungen gleich oder größer ist als die jeweilige größte Ausdehnung des Hochspannungsisolatorschafts bzw. der daran angeordneten Isolatorschirme.

Es ist bevorzugt, wenn der Befestigungsbereich hutförmig und zum Stülpen über die Isolatorkappe ausgebildet ist. Durch eine entsprechende Formgebung lässt sich ein besonders guter Formschluss zwischen Befestigungsbereich und Isolatorkappe erreichen.

Es ist bevorzugt, wenn die Verschmutzungsschutzvorrichtung eine von der Durchführungsöffnung bis zur Außenkante des Schutzschirmes verlaufende radiale Montageöffnung zur seitlichen Durchführung des Anschlusselementes der Isolatorkappe der Verschmutzungsschutzvorrichtung aufweist. Durch eine entsprechende Montageöffnung lässt sich die Verschmutzungsschutzvorrichtung seitlich auf die Isolatorkappe aufschieben, sodass eine Montage der Verschmutzungsschutzvorrichtung selbst bei an einem Hochspannungsmast angebundener Isolatorkappe möglich ist. Da die Montage auf der Erdpotentialseite des Hochspannungsisolators erfolgt, ist hierfür ggf. nicht einmal eine Abschaltung der betroffenen Hochspannungsleitung erforderlich.

Ist die Verschmutzungsschutzvorrichtung ausreichend elastisch, kann es ausreichend sein, wenn die Montageöffnung als Schlitz - also als Spalt mit Breite Null - ausgeführt ist, sodass sich die Montageöffnung während der Montage weiten lässt. Vergleichbares gilt selbstverständlich auch, wenn die Montageöffnung als Spalt mit einer vorgegebenen Breite ausgestaltet ist, der sich - bei ausreichender Elastizität - während der Montage weiten lässt. Ist die Verschmutzungsschutzvorrichtung nicht (ausreichend) elastisch, sollte die Montageöffnung vorzugsweise eine ausreichende Minimalbreite aufweisen, um die Verschmutzungsschutzvorrichtung an der schmalsten Stelle der Isolatorkappe auf diese aufzuschieben.

Es ist bevorzugt, wenn im Befestigungsbereich oder am Schutzschirm eine Lasche befestigt ist. Insbesondere wenn die Isolatorkappe als Gabelkappe (vgl. bspw. DIN 48 062, Teil 2 vom August 1990) ausgestaltet ist, kann über eine entsprechende Lasche die Verschmutzungsschutzvorrichtung gegen ein unbeabsichtigtes Abheben des Befestigungsbereichs von der Isolatorkappe gesichert werden. Dazu kann die Lasche zwischen den Gabeln der Gabelkappe unterhalb des Befestigungsbolzens geführt werden.

Es ist besonders bevorzugt, wenn sich das freie Ende der Lasche über die Durchführungsöffnung hinaus wenigstens bis zur Außenkante des Schutzschirmes erstreckt, wobei die Lasche vorzugsweise parallel zur und überlappend mit der Montageöffnung verlaufend angeordnet ist. Dadurch wird erreicht, dass sich die Lasche - auch wenn sie wie beschrieben durch die Gabelkappe gesteckt ist - über die Montageöffnung erstreckt und so der Abdeckung der Montageöffnung dient. Insbesondere wenn die Montageöffnung als Spalt ausgeführt ist, kann die Lasche also den Spalt abdecken, um so einen vollständig geschlossenen Schutzschirm sicherzustellen. Bei Bedarf kann die Lasche in diesem Bereich an dem Schutzschirm lösbar oder unlösbar befestigt werden, bspw. durch Kleben.

Es ist weiterhin bevorzugt, wenn die Breite der Lasche an die Breite der Montageöffnung angepasst und das freie Ende der Lasche zum Verschließen der radialen Montageöffnung vorgesehen ist, wobei die Kanten der Montageöffnung vorzugsweise jeweils eine Führung für die Lasche aufweisen. In anderen Worten kann die Lasche - bspw. nach dem Durchführen durch eine Gabelkappe - in die seitlichen Führungen der Montageöffnung hindurchgeführt werden, wodurch einerseits die Montageöffnung geschlossen wird und andererseits das freie Ende der Lasche an dem Schutzschirm gesichert wird. Insbesondere in diesem Fall ist eine vollständig werkzeugfreie Montage und Sicherung der Verschmutzungsschutzvorrichtung möglich.

Bei anderen Ausführungen der Isolatorkappe - bspw. als Pfannenkappe gemäß DIN 48 062, Teil 1 vom August 1990 - kann es vorteilhaft sein, wenn die Lasche an ihrem freien Ende eine Durchführungsöffnung für einen Sicherungssplint oder ein Ösenelement aufweist. In diesem Fall wird die Lasche im Regelfall nicht durch die Isolatorkappe geführt, sondern liegt an dieser an, wobei die Lasche über einen Sicherungssplint an der Isolatorkappe befestigt werden kann. Der Sicherungssplint kann dabei unmittelbar durch die Durchführungsöffnung geführt sein. Alternativ ist es möglich, dass durch die Durchführungsöffnung die Öse eines Ösenelements geführt ist, durch die der Sicherungssplint geführt ist, wobei das Ösenelement auf der von der Öse abgewandten Seite die Durchführungsöffnung hintergreift. Bei dem Sicherungssplint kann es sich insbesondere um einen für die Befestigung der Isolatorkappe bereits grundsätzlich vorgesehenen Sicherungssplint handeln, sodass also weder ein zusätzlicher Sicherungssplint noch eine evtl. bauliche Veränderung der Isolatorkappe zur Befestigung eines zusätzlichen Sicherungssplintes erforderlich wäre.

Es ist bevorzugt, wenn der Schutzschirm im Wesentlichen kreisförmig ausgestaltet ist. Ist an dem Hochspannungsisolator ein Lichtbogen-Schutzring vorgesehen, ist es weiter bevorzugt, wenn der Radius des Schutzschirmes im Wesentlichen dem Außenradius des Lichtbogen-Schutzrings entspricht. Bei einem Lichtbogen-Schutzring handelt es sich um einen auf der Höhe der Isolatorkappe und damit oberhalb des Hochspannungsisolators montierten verzinkten Metallring, der im Falle eines Lichtbogens parallel zum Hochspannungsisolator einen Lichtbogenfußpunkt bildet, über den der Lichtbogenstrom in die Erde abgeleitet wird. Der Lichtbogen-Schutzring dient dabei in erster Linie dazu, den Lichtbogen von dem eigentlichen Hochspannungsisolator fernzuhalten, um Beschädigung daran zu vermeiden. Da bei Auftreten eines Lichtbogens große Hitze freigesetzt wird, ist es vorteilhaft, wenn sich der Schutzschirm der erfindungsgemäßen Verschmutzungsschutzvorrichtung nicht über den Lichtbogen-Schutzring hinaus erstreckt. Die bei einem Lichtbogen auftretende Hitze kann dann gut entweichen, ohne dass die Verschmutzungsschutzvorrichtung durch die Hitzeentwicklung beschädigt werden würde.

Es ist bevorzugt, wenn der Schutzschirm derart nach außen geneigt ist, dass im montierten Zustand Regenwasser nach außen abfließt. Durch eine entsprechende Neigung kann auf dem Schutzschirm evtl. befindlicher Vogeldreck abgewaschen werden, wodurch eine natürliche Reinigung des Schutzschirms erreicht wird. Die Neigung des Schutzschirms beträgt vorzugsweise 10° bis 30°, weiter vorzugsweise 20° gegenüber der Horizontalen.

Es ist weiter bevorzugt, wenn an der Außenkante des Schutzschirmes eine Tropfkante vorgesehen ist. Dadurch kann sichergestellt werden, dass über den Schutzschirm abfließendes Regenwasser oder davon aufgeweichter Vogeldreck nicht an der Unterseite des Schutzschirmes nach Innen und in der Folge auf den Hochspannungsisolator gelangt.

Es ist bevorzugt, wenn der Schutzschirm an dem von der Durchführungsöffnung entfernten Ende des Befestigungsbereiches angeordnet ist. Dadurch lässt sich insbesondere bei eine hutförmigen Ausgestaltung des Befestigungsbereiches die Herstellung der erfindungsgemäßen Verschmutzungsschutzvorrichtung vereinfachen und weiterhin die Befestigungssicherheit der Formschlussverbindung erhöhen.

Befestigungsbereich, Schutzschirm und/oder Lasche können einstückig ausgeführt sein. Die Verschmutzungsschutzvorrichtung ist vorzugsweise ganz oder teilweise aus Kunststoff, vorzugsweise aus spritzgussfähigem Kunststoff. Dabei ist der Kunststoff vorzugweise Wetter- und UV-Beständig und weist außerdem eine gute Beständigkeit gegen Vogeldreck auf. Es ist aber auch möglich, dass die Verschmutzungsschutzvorrichtung ganz oder teilweise aus verzinktem Stahlblech ist.

Zur Erläuterung der erfindungsgemäßen Anordnung wird auf die vorstehenden Ausführungen verwiesen.

Die Erfindung wird nun anhand vorteilhafter Ausführungsformen unter Bezugnahme auf die beigefügten Zeichnungen beispielhaft beschrieben. Es zeigen:
- Figur 1:: eine schematische Darstellung eines Hochspannungsmastes umfassend erfindungsgemäße Anordnungen aus Hochspannungsisolatoren mit erfindungsgemäßen Verschmutzungsschutzvorrichtungen;
- Figur 2a-c:: Schematische Darstellungen eines ersten Ausführungsbeispiels einer erfindungsgemäßen Anordnung aus Hochspannungsisolator und erfindungsgemäßer Verschmutzungsschutzvorrichtung;
- Figur 3:: eine schematische Darstellung eines zweiten Ausführungsbeispiels einer erfindungsgemäßen Anordnung aus Hochspannungsisolator und erfindungsgemäßer Verschmutzungsschutzvorrichtung; und
- Figur 4a-c:: Schematische Darstellungen eines dritten Ausführungsbeispiels einer erfindungsgemäßen Anordnung aus Hochspannungsisolator und erfindungsgemäßer Verschmutzungsschutzvorrichtung.

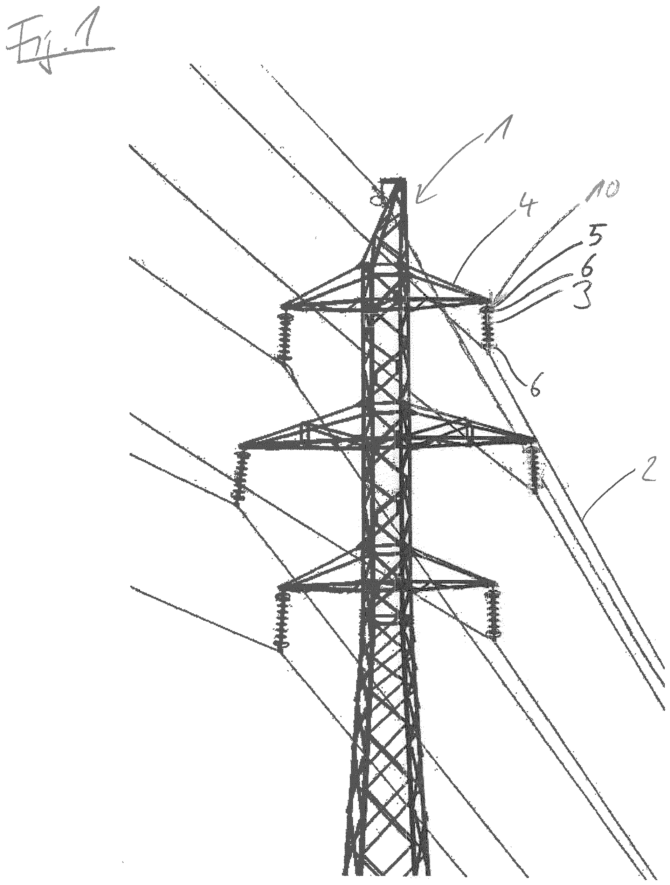

In Figur 1 ist ein Hochspannungsmast 1 mit daran aufgehängten Hochspannungsleitungen 2 dargestellt. Die Hochspannungsleitungen 2 sind über Hochspannungsisolatoren 3 an den Traversen 4 befestigt, welche die Hochspannungsleitungen 2 elektrisch von dem Hochspannungsmast 1 und damit dem Erdpotential trennen. Zur Befestigung der Hochspannungsisolatoren 3 an den Traversen 4 weisen diese Isolatorkappen 5 auf.

An den Hochspannungsisolatoren 3 ist am oberen und unteren Ende jeweils ein Lichtbogen-Schutzring 6 vorgesehen, zwischen denen ein evtl. entstehender Lichtbogen über den Hochspannungsisolator 3 hinweggeführt wird, um den Hochspannungsisolator 3 selbst nicht zu beschädigen.

Am oberen Ende jedes Hochspannungsisolators 3 ist weiterhin eine erfindungsgemäße Verschmutzungsschutzvorrichtung 10 vorgesehen.

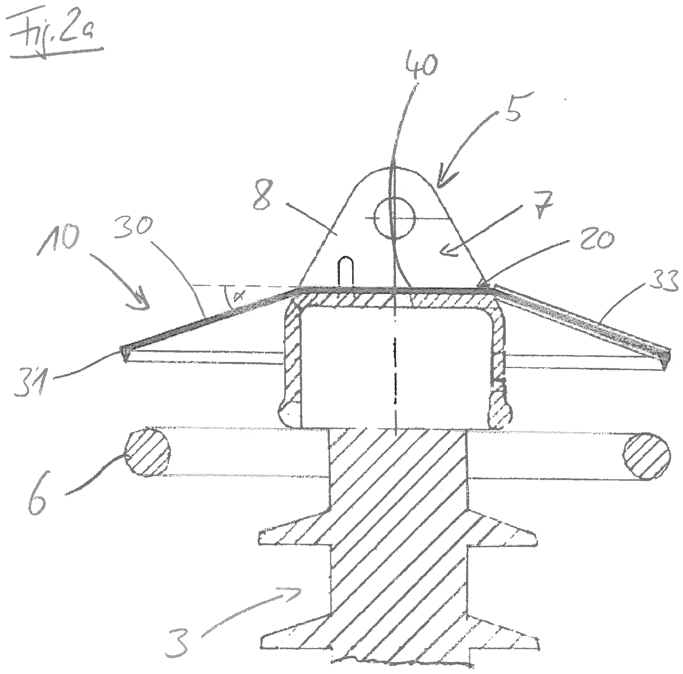

In Figur 2a das obere Ende einer Anordnung aus Hochspannungsisolator 3 und Verschmutzungsschutzvorrichtung 10, wie sie bei dem Hochspannungsmast 1 gemäß Figur 1 eingesetzt ist, in einer Schnittdarstellung detaillierter gezeigt.

Der Hochspannungsisolator 3 umfassend einen Schaft und angeordnete Isolatorschirme ist fest mit der Isolatorkappe 5 verbunden, die in diesem Ausführungsbeispiel als Gabelkappe ausgeführt ist, d. h. als Anschlusselement 7 sind zwei parallel angeordnete Gabelbleche 8 mit zueinander fluchtenden Bolzendurchführungsöffnungen vorgesehen. Die Anbindung an den Hochspannungsmast 1 erfolgt über einen geeigneten Bolzen (nicht dargestellt).

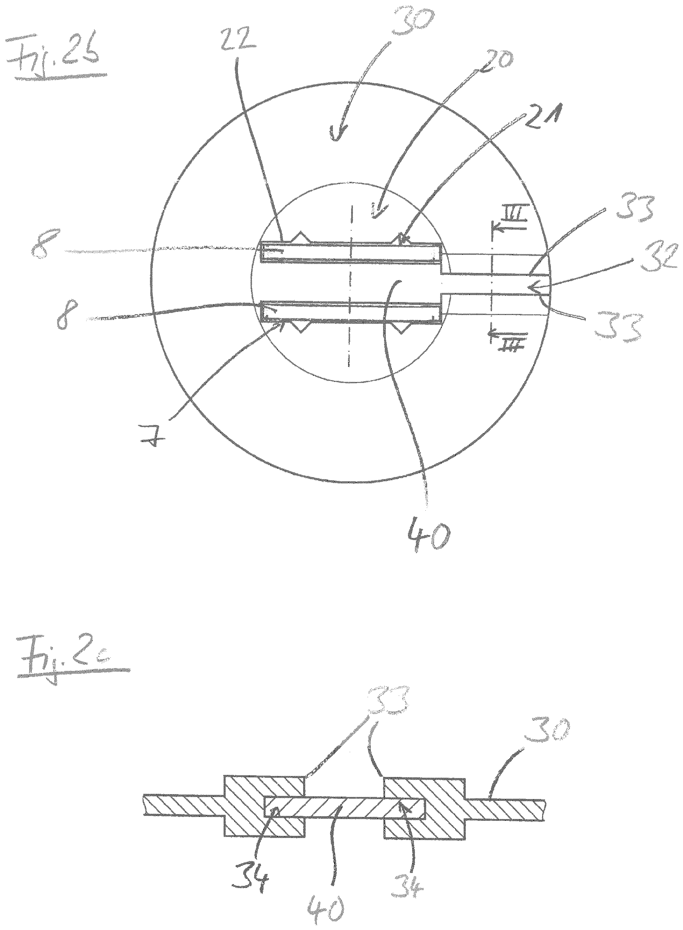

Die Verschmutzungsschutzvorrichtung 10, die in Figur 2b auch in eine Draufsicht dargestellt ist, umfasst einen Befestigungsbereich 20 und einen Schutzschirm 30.

Der Befestigungsbereich 20 umfasst eine Durchführungsöffnung 21 für das Anschlusselement 7, deren Begrenzung 22 als Umhüllende formschlüssig an den beiden Gabelblechen 8 anliegt. Dadurch wird eine formschlüssige Verbindung zwischen Verschmutzungsschutzvorrichtung 10 und Isolatorkappe 5 geschaffen.

Um den Befestigungsbereich 20 ist der Schutzschirm 30 angeordnet. Der Schutzschirm 30 ist kreisförmig und derart um α = 20° nach außen geneigt, dass Regenwasser über den Schutzschirm 30 und dessen umlaufende Tropfkante 31 abtropfen kann. Der Radius des Schutzschirmes 30 entspricht dabei im Wesentlichen dem Außenradius des Lichtbogen-Schutzrings 6. Der Schutzschirm 30 überdeckt damit den Hochspannungsisolator 3 und den Lichtbogenschutzring 6 derart, dass von dem Schutzschirm 30 abtropfendes Wasser, welches ggf. Teile von durch den Schutzschirm 30 aufgefangenen Vogeldreck mitführt, grundsätzlich nicht auf den Hochspannungsisolator 3 auftrifft und auch ein unmittelbar von einem Großvogel (z.B. Storch oder Reiher) abgesetzter Vogeldreck, der von der Menge ausreichen kann, die Luftstrecke zwischen den beiden mit Erd- bzw. Hochspannungspotenzial beaufschlagten Lichtbogen-Schutzringen 6 zu überbrücken, keinen Kurzschluss verursachen kann.

In dem Schutzschirm 30 und dem Befestigungsbereich 20 ist eine radial verlaufende Montageöffnung 32 zur seitlichen Durchführung des Anschlusselementes 7 der Isolatorkappe 5 vorgesehen. Diese Montageöffnung 32 führt von der Durchführungsöffnung 21 im Befestigungsbereich 20 bis zur Außenkante des Schutzschirmes 30 und ist als Spalt ausgestaltet. Die Breite des Spaltes ist dabei geringer als die Ausdehnung des hindurchzuführenden Anschlusselementes 7, allerdings ist die gesamte Verschmutzungsschutzvorrichtung 10 derart elastisch verformbar, dass sich die Montageöffnung 32 zur seitlichen Durchführung des Anschlusselementes 7 der Isolatorkappe 5 weiten lässt. Die Verschmutzungsschutzvorrichtung 10 lässt sich so nachträglich auch an bereits montierten Hochspannungsisolatoren 3 anbringen.

An dem Befestigungsbereich 20 ist weiterhin eine Lasche 40 befestigt, deren freies Ende sich über die Durchführungsöffnung 21 hinaus bis zur Außenkante des Schutzschirmes 30 erstreckt. Die Lasche 40 wird zwischen den beiden Gabelblechen 8 der Isolatorkappe 5 hindurchgeführt und kann an diesen formschlüssig anliegen. Die Lasche 40 verläuft weiterhin parallel zur und überlappend mit der Montageöffnung 32 und schließt somit den dort vorgesehen Spalt. Wie insbesondere im Teilschnitt gemäß Figur 2c entlang der Linie III-III aus Figur 2b zu sehen, weisen die Kanten 33 der Montageöffnung 32 dabei Führungen 34 auf, in welche die Lasche 40 eingeführt ist. Die Breite der Lasche 40 ist dabei an die Breite der Montageöffnung 32 bzw. deren Führungen 34 angepasst. Ist die Lasche 40, wie dargestellt, in die Führungen 34 eingeführt, wird die Montageöffnung 32 derart verschlossen, dass flüssiger oder durch Regenwasser verflüssigter Vogeldreck nicht durch die Montageöffnung 32 auf den Hochspannungsisolator 3 gelangen kann. Gleichzeitig wird ein unerwünschtes Abheben der Verschmutzungsschutzvorrichtung 10 von der Isolatorkappe 5, im Zusammenspiel mit dem durch das Anschlusselement 7 geführten Befestigungsbolzen und der unterhalb des Befestigungsbolzens durchgeführten Lasche 40 zumindest aber eine Verlustsicherung erreicht.

Der Befestigungsbereich 20, der Schutzschirm 30 und die Lasche 40 sind einstückig z.B. in einem Spritzgussverfahren aus Kunststoff hergestellt, wobei der Kunststoff für den vorgesehenen Einsatzzweck ausreichend wetter- und UV-beständig ausgewählt ist und trotz grundsätzlicher Formbeständigkeit ausreichend elastisch, um die oben beschriebene Weitung der Montageöffnung 32 zu ermöglichen.

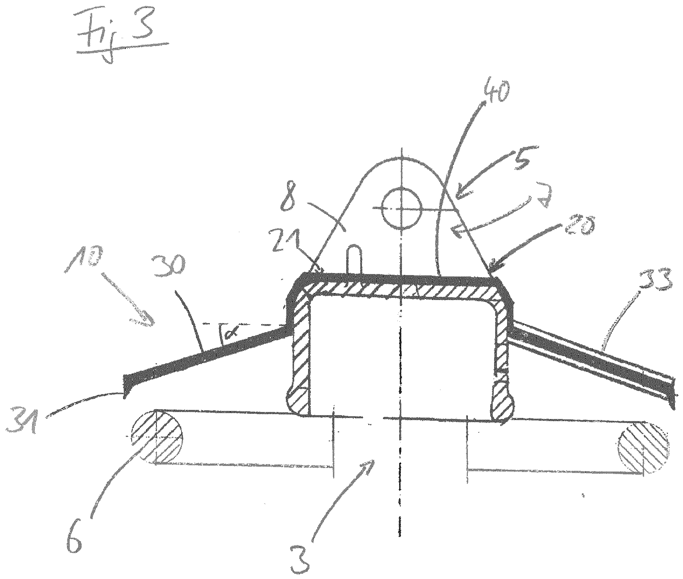

In Figur 3 ist eine zu Figur 2a-c vergleichbare Anordnung aus Hochspannungsisolator 3 und Verschmutzungsschutzvorrichtung 10 gezeigt, wobei die Verschmutzungsschutzvorrichtung 10 jedoch leicht abweichend ausgeführt ist. Im Folgenden wir daher lediglich auf die Unterschiede der in Figur 3 gezeigten Ausführungsform gegenüber der Ausführungsform gemäß Figur 2a-c eingegangen, während im Übrigen auf die vorstehenden Erläuterungen verwiesen wird.

Wie unmittelbar in Figur 3 zu erkennen, ist der Befestigungsbereich 20 hutförmig und zum Stülpen über die Isolatorkappe 5 ausgebildet. Durch diese Formgebung wird der Formschluss zwischen Verschmutzungsschutzvorrichtung 10 und Isolatorkappe 5 weiter verbessert. Der Schutzschirm 30 ist dabei an dem von der Durchführungsöffnung 21 entfernten Ende des Befestigungsbereiches 20 angeordnet, was für die Spritzgussfertigung vorteilhaft ist. In Figur 3 ist weiterhin zu erkennen, dass die Lasche 40 in ihrer Formgebung an die Hutform des Befestigungsbereiches 20 angepasst ist. Auch dies erleichtert die Fertigung und vermeidet darüber hinaus unnötige Spannungen innerhalb Verschmutzungsschutzvorrichtung 10 im Einsatzzustand, wie er in Figur 3 dargestellt ist. Im Übrigen ist die Verschmutzungsschutzvorrichtung 10 wie in Zusammenhang mit Figur 2a-c beschrieben ausgeführt.

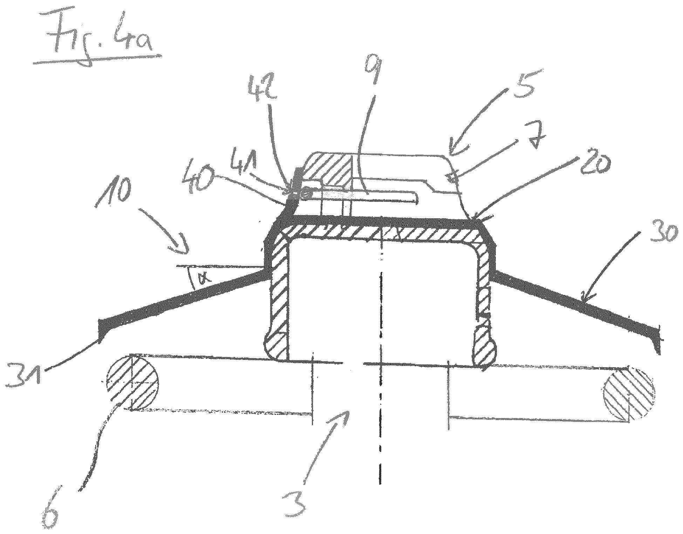

In Figur 4a-c ist eine weitere Ausführungsform dargestellt. Im Unterschied zu den Ausführungsformen gemäß Figuren 2a-c und 3 weist der Hochspannungsisolator 3 jedoch keine Gabelkappe, sondern vielmehr einen Pfannenkappe als Isolatorkappe 5 auf, woraus sich einige Unterschiede auch bei der Verschmutzungsschutzvorrichtung 10 ergeben.

Auch wenn die Durchführungsöffnung 21 in dem Befestigungsbereich 20 für die Durchführung des Anschlusselementes 7 entsprechend angepasst ist und grundsätzlich an diesem anliegen kann (nicht dargestellt), wird der Formschluss zwischen Befestigungsbereich 20 und der Isolatorkappe 5 im Wesentlichen durch die hutförmige und zum Stülpen über die Isolatorkappe 5 geeignete Ausgestaltung des Befestigungsbereiches 20 erreicht.

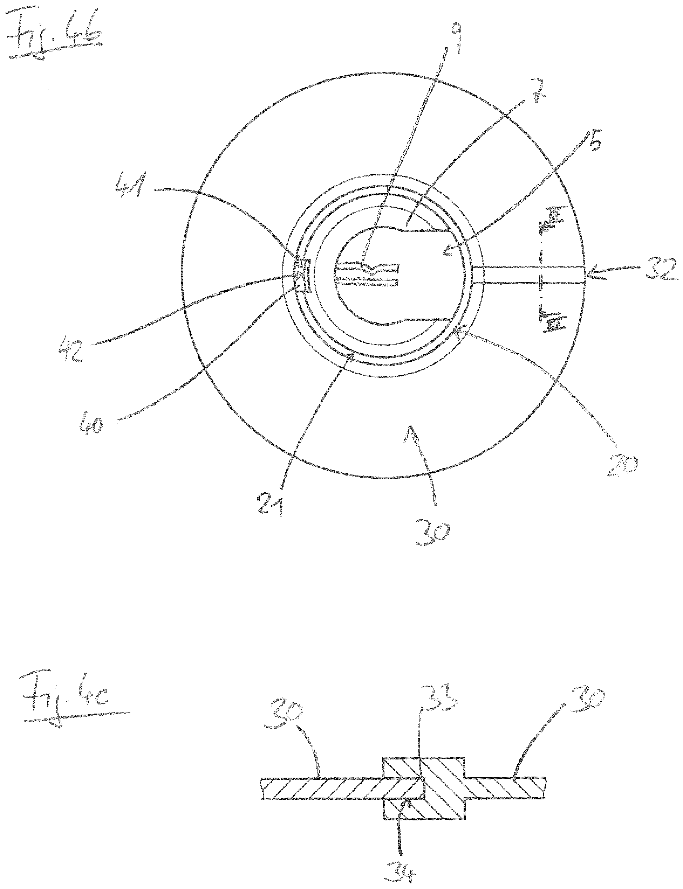

An der von der Durchführungsöffnung 21 entfernten Seite des Befestigungsbereiches ist der Schutzschirm 30 angeordnet. Der Schutzschirm 30 ist vergleichbar zu dem Schutzschirm aus Figuren 2a-c und 3 dimensioniert, geneigt und mit einer Tropfkante 31 versehen. Diesbezüglich wird daher auf die vorstehenden Ausführungen verwiesen. Die Montageöffnung 32 ist hingegen nicht als breiter Spalt, sondern lediglich als Schlitz (also als Spalt mit Breite Null) ausgeführt. Da die Verschmutzungsschutzvorrichtung 10 wie die vorherigen Vorrichtungen aus grundsätzlich formstabilen, wenn auch ausreichend elastischem Kunststoff einstückig im Spritzgussverfahren hergestellt ist, lässt sich die Montageöffnung 32 aber ausreichend weiten, um die Verschmutzungsschutzvorrichtung 10 im montierten Zustand des Hochspannungsisolators 3 seitlich auf die Isolatorkappe 5 aufschieben zu können. Wie im Teilschnitt gemäß Figur 4c entlang der Linie III-III aus Figur 4b zu sehen, weist dabei eine Kante 33 der Montageöffnung 32 eine Führung 34 auf, in welche die andere Kante 33 eingeführt ist. Dadurch wird ein lösbarer Verschluss der als Schlitz ausgestalteten Montageöffnung 32 erreicht, mit dem die Stabilität der Verschmutzungsschutzvorrichtung 10 erhöht werden kann. Außerdem wird die Montageöffnung 32 abgedichtet, sodass bspw. flüssiger oder durch Regenwasser verflüssigter Vogeldreck nicht durch die Montageöffnung 32 auf den Hochspannungsisolator 3 gelangen kann.

Die am Befestigungsbereich 20 befestigte Lasche 40 ist im eingebauten Zustand an dem Anschlusselement 7 hochgeführt und weist eine Durchgangsöffnung 41 auf, durch die ein Ösenelement 42 geführt ist. Durch die Öse des Ösenelementes 42 ist der bei Pfannenkappen übliche Sicherungssplint 9 zur Sicherung des Klöppels (nicht dargestellt) in dem Anschlusselement 7 geführt, wobei das Ösenelement 42 mit seinem anderen Ende die Durchgangsöffnung 41 hintergreift, sodass die Lasche 40 an dem Sicherungssplint 9 befestigt ist. Dadurch wird die Verschmutzungsschutzvorrichtung 10 an dem Hochspannungsisolator 3 bzw. dessen Isolatorkappe 5 gesichert.

## Patentansprüche

1. Verschmutzungsschutzvorrichtung (10) für Hochspannungsisolatoren (3) zur Befestigung an der Isolatorkappe (5) des Hochspannungsisolators (3) umfassend einen Befestigungsbereich (20), der für eine formschlüssige Verbindung mit der Isolatorkappe (5) ausgebildet ist und eine Durchführungsöffnung (21) für das Anschlusselement (7) der Isolatorkappe (5) aufweist, und einem Schutzschirm (30), der sich radial um den Befestigungsbereich (20) erstreckt, um den Hochspannungsisolator (3) zu überdecken.

2. Vorrichtung nach Anspruch 1,
**dadurch gekennzeichnet, dass**
der Befestigungsbereich (20) hutförmig und zum Stülpen über die Isolatorkappe (5) ausgebildet ist.

3. Vorrichtung nach Anspruch 1 oder 2,
**dadurch gekennzeichnet, dass**
die Verschmutzungsschutzvorrichtung (10) einen von der Durchführungsöffnung (21) bis zur Außenkante des Schutzschirmes (30) verlaufenden radiale Montageöffnung (32) zur seitlichen Durchführung des Anschlusselementes (7) der Isolatorkappe (5) aufweist.

4. Vorrichtung nach einem der vorhergehenden Ansprüche,
**dadurch gekennzeichnet, dass**
im Befestigungsbereich (20) oder am Schutzschirm (30) eine Lasche (40) befestigt ist.

5. Vorrichtung nach Anspruch 4,
**dadurch gekennzeichnet, dass**
sich das freie Ende der Lasche (40) über die Durchführungsöffnung (21) hinaus wenigstens bis zur Außenkante des Schutzschirmes (30) erstreckt, wobei die Lasche (40) vorzugsweise parallel zur und überlappend mit der Montageöffnung (32) verlaufend angeordnet ist.

6. Vorrichtung nach Anspruch 5,
**dadurch gekennzeichnet, dass**
die Breite der Lasche (40) an die Breite der Montageöffnung (32) angepasst und das freie Ende der Lasche (40) zum Verschließen der radialen Montageöffnung (32) vorgesehen ist, wobei die Kanten (33) der Montageöffnung (32) vorzugsweise jeweils eine Führung (34) für die Lasche (40) aufweisen.

7. Vorrichtung nach Anspruch 4,
**dadurch gekennzeichnet, dass**
die Lasche (40) an ihrem freien Ende eine Durchführungsöffnung (41) für einen Sicherungssplint (9) oder ein Ösenelement (42) aufweist.

8. Vorrichtung nach einem der vorhergehenden Ansprüche,
**dadurch gekennzeichnet, dass**
der Schutzschirm (30) im Wesentlichen kreisförmig ausgestaltet ist, wobei der Radius des Schutzschirmes (30) vorzugsweise im Wesentlichen dem Außenradius eines Lichtbogen-Schutzrings (6) des Hochspannungsisolators (3) entspricht.

9. Vorrichtung nach einem der vorhergehenden Ansprüche,
**dadurch gekennzeichnet, dass**
der Schutzschirm (30) derart nach außen geneigt ist, dass im montierten Zustand Regenwasser nach außen abfließt, wobei die Neigung (α) vorzugsweise 10° bis 30°, weiter vorzugsweise 20° beträgt.

10. Vorrichtung nach einem der vorhergehenden Ansprüche,
**dadurch gekennzeichnet, dass**
an der Außenkante des Schutzschirmes (30) eine Tropfkante (31) vorgesehen ist.

11. Vorrichtung nach einem der vorhergehenden Ansprüche,
**dadurch gekennzeichnet, dass**
der Schutzschirm (30) an dem von der Durchführungsöffnung (21) entfernten Ende des Befestigungsbereiches (20) angeordnet ist.

12. Vorrichtung nach einem der vorhergehenden Ansprüche,
**dadurch gekennzeichnet, dass**
Befestigungsbereich (20), Schutzschirm (30) und/oder Lasche (40) einstückig und/oder aus Kunststoff, vorzugsweise aus spritzgussfähigem Kunststoff sind.

13. Anordnung umfassend einen Hochspannungsisolator (3) mit Isolatorkappe (5) und eine an der Isolatorkappe (5) angeordnete Verschmutzungsschutzvorrichtung (10), wobei die Verschmutzungsschutzvorrichtung (10) nach einem der vorhergehenden Ansprüche ausgebildet ist und durch Formschluss mit der Isolatorkappe (5) verbunden ist.

14. Anordnung nach Anspruch 13,
**dadurch gekennzeichnet, dass**
die Isolatorkappe (5) eine Gabelkappe oder eine Pfannenkappe ist.

15. Anordnung nach Anspruch 13 oder 14,
**dadurch gekennzeichnet, dass**
der Hochspannungsisolator (3) einen Lichtbogen-Schutzring (6) im Bereich der Isolatorkappe (5) aufweist.
